# EUROPEAN PATENT APPLICATION

(11) **EP 4 541 660 A1**
(43) Date of publication of application: **23.04.2025**
(21) Application number: 23204658.1
(22) Date of filing: 19.10.2023
(51) Int. Cl.: B60Q 1/06, B60Q 1/068, B60Q 1/076

(54) **VEHICLE HEADLIGHT**

(71) Applicant: Hella Autotechnik Nova, s.r.o., 78985 Mohelnice (CZ)
(72) Inventor: Krepelka, Pavel, 78985 Mohelnice (CZ)
(74) Representative: Behr-Wenning, Gregor

(57) **Abstract**

Vehicle headlight comprising at least a first module (1), a second module (2), an actuator (3) for adjusting the modules, and a support structure. Both modules are connected to the support structure through a movable connection. The headlight further comprises an adjusting arm (4) for transferring movement from the actuator (3) to each of the two modules. The adjusting arm (4) extends between the first module (1) and the second module (2) and is connected to the first module (1), to the second module (2) and to the actuator (3).

## Description

### Technical field

The present invention relates to automotive lighting, namely to headlights for vehicles. More specifically it relates to headlights with adjustable modules where one actuator adjusts multiple modules simultaneously.

### Background of the Invention

Headlights for automobiles which comprise adjustable lighting components are known in the state of the art. These components can be whole lighting modules or individual optical components such as reflectors. The purpose of such adjustability is for example in providing headlights which can be used in various applications or on different vehicles; in providing a way for adjusting the headlights during maintenance, in case their light output is unsuitable; or in providing dynamic adjustment. For example, some modules are automatically tilted with respect to a horizontal plane depending on acceleration or braking of the automobile in order to prevent blinding of other drivers or to keep the road ahead illuminated sufficiently far ahead.

When there are multiple such adjustable components which need to by adjusted synchronously, a mechanical link between the components can be provided in order to adjust them together by a common actuator. A headlight with two reflectors linked by a rod, wherein a first of the reflectors is directly adjusted by an actuator and the second reflector is then adjusted by the rod transferring movement from the first reflector, is disclosed in document US 10752161 B2.

This approach to synchronization of the adjustment of multiple components can however lead to a misalignment between the components. Each of the reflectors has its own rotational axis and these axes do not coincide. The connection by the rod can then rotate the second reflector by a different angle relative to the first reflector. This means that the illumination pattern provided by the headlight can be incorrect in some adjustment positions. In some cases, the pattern can even be outside of limits mandated by laws.

It would therefore be desirable to provide an improved way of synchronizing the movement of multiple headlight components, especially headlight modules, during their adjustment.

### Summary of the Invention

The shortcomings of the solutions known in the prior art are to some extent eliminated by a vehicle headlight comprising at least a first module for providing illumination and a second module for providing illumination. The headlight further comprises an actuator for adjusting the modules, and a support structure, e.g., a frame or casing. The first module is connected to the support structure through a movable connection and so is the second module. The headlight further comprises an adjusting arm for transferring movement from the actuator to the first module and to the second module. The adjusting arm extends between the first module and the second module and is connected to both. The adjusting arm is also connected to the actuator.

Movement is thus transferred by the adjusting arm from the actuator to the first module and from the actuator to the second module. There isn't the transferring of movement from the actuator to one of the modules through the other module known from the state of the art. The differences in module adjustment caused in the current state of the art by connecting the actuator to one module and then connecting the modules by a push rod are thus at least partially eliminated. Both modules thus remain in a substantially constant relative position/inclination and their respective light beams thus keep their orientation with respect to each other. There is thus substantially no misalignment of the modules caused by their adjustment, which is desirable, and in many cases even mandated by law.

Another advantage of the present invention is that it requires fewer parts for the movement synchronization. The resulting headlight is thus lighter, cheaper, and easier to assemble. Another advantage is in limiting the effect of heat or vibrations to the adjustment/synchronization. Since the movement is transferred more directly to both modules from the actuator, heat and vibration impact both modules in similar way, and thus there is less of a difference in their adjustment.

The actuator can for example be an electromotor, especially a step motor. It can be a linear actuator or a rotational actuator. The actuator can be automatically controlled, e.g., for automatic self-leveling of the modules. The headlight, or especially two such headlights, can be mounted to a vehicle, especially an automobile. Such an automobile can then be an embodiment of the invention.

The adjusting arm can e.g., be made from plastic or alternatively from a composite material, metal etc. It can comprise a reinforcing structure for increasing its mechanical strength and/or limiting its thermal expansivity. The arm can be plate-shaped, i.e., it can have size in one dimension (thickness) significantly smaller than sizes in other dimensions (width and length). Such an arm shape can also reduce thermal expansivity, especially in length-direction (which is critical for a correct adjustment synchronization), when compared for example to rods used for connecting modules in the state of the art.

The modules can be arranged in substantially any mutual configurations, i.e., their relative distance and position can vary. The shape and size of the adjusting arm then also varies accordingly. In one configuration, one of the modules is more at the front than the other, i.e., it is farther away from the vehicle engine. The arm then extends in the front-to-back direction and the actuator can move the arm also substantially in the front-to-back direction. The modules are preferably rotationally attached to the headlight and their linkage by the adjusting arm then keeps them at substantially the same inclination with respect to each other.

The modules can have similar or the same construction, e.g., they can be both matrix modules. They can also each be different and configured for a specific illumination function. The headlight can further comprise other modules, which can be non-adjustable or adjustable independently of the two modules connected by the adjusting arm. It is also possible to provide a third module, which is adjustable, and which is also connected to the adjusting arm.

The support structure of the headlight can by any structural component or an assembly of components which keeps the headlight or a part of it together and/or facilitates its mounting to a vehicle. It can be a frame located inside of the headlight; it can be an outer casing which encapsulates other components etc. The modules can be attached directly to the support structure, or they can be attached to it through further structural component(s). The adjusting arm is preferably directly connected to both modules, e.g., the arm can be in direct contact with the modules or there can be a joint (preferably at each end of the arm) which is fixed to the arm, fixed to one module, and facilitates their movable connection. The movement from the actuator to each of the modules is then transferred by the adjusting arm directly, without further interconnecting pieces which might affect the synchronization of the modules.

The movable connections are preferably rotational connections. For most headlights and modules, rotational adjustment with one axis of rotation is sufficient. For example, the connection can comprise ball joints, which are relatively easy and cheap to manufacture. Two ball joints connecting the same two components can then define a single rotational axis. Rotation around a substantially horizontal axis can be used in headlights, e.g., to keep the light-output direction of the headlight at a reasonable inclination with respect to the road (too much inclination limits the illuminated distance in front of the vehicle, while too little inclination can cause blinding oncoming vehicles, which is why adjustment by this rotation is often needed). Rotation around vertical axis can also be used, e.g., for dynamic cornering.

The movable connection between the first module and the support structure and/or the movable connection between the second module and the support structure can be a rotational connection with one rotational axis. Preferably, both the modules are connected to the support structure by a rotational connection.

The movable connection between the first module and the support structure and the movable connection between the second module and the support structure can then have parallel rotational axes. The adjusting arm connected to the actuator is especially useful for headlights with rotationally adjustable modules with parallel axes. Such modules are often misaligned during adjustment in headlights according to the state of the art because the rod which connects them can rotate each module by a slightly different angle. Keeping the modules aligned (e.g., with parallel optical axes, i.e., parallel output directions; or with optical axes intersecting at a certain distance in front of the vehicle, etc.), where the type of alignment depends on the module's illumination function, is especially important for modules rotatable around parallel axes. Misalignment can cause significant inhomogeneities, can dazzle oncoming traffic etc.

The connection between the adjusting arm and the first module and/or the connection between the adjusting arm and the second module can be a rotational connection. Preferably both of these connections are rotational connections. These connections can have a single rotational axis or multiple axes. For example, ball joints can be used for these connections. These rotational connections enable the arm to transfer movement, especially linear movement, while enabling slight tilting of the arm, which might be needed, e.g., when the arm connects two rotational modules.

The connection between the adjusting arm and the actuator can be a rotational connection. Similarly to the connections above, a ball joint can be used for this connection. This movable connection can also, for example, enable the arm to tilt while being linearly shifted. Any or all of the above-mentioned rotational or otherwise movable connections (between the arm and the modules or the actuator) can help transfer movement between the modules and the actuator in the desired direction(s) while allowing some free movement to the arm so that there is no deformation or tension in directions where it is not needed for adjusting the modules.

The actuator can be a linear actuator. It can be e.g., a linear motor or a rotational motor with a mechanism for changing rotational motion to linear motion (e.g., with a screw or toothed rack), when a linear motion is needed for the module adjustment.

The adjusting arm can be curved. A curved shape can be useful e.g., when the modules have different rotational axes and thus cannot easily by connected via a straight arm. Curvature can also help increasing the arm's mechanical strength or resistance to thermal expansivity.

The adjusting arm can alternatively or additionally have a non-constant cross-section. Such a cross-section can help with attaching the arm to three different components (the modules and actuator) and it can also have a positive impact on the arm's mechanical strength or resistance to thermal expansivity.

### Description of drawings

A summary of the invention is further described by means of exemplary embodiments thereof, which are described with reference to the accompanying drawings, in which:
- Fig 1.: shows a schematic perspective view of lighting modules which are a part of a vehicle headlight according to a first embodiment of the pre-sent invention, wherein an adjusting arm connecting the modules and provided with an actuator engaging directly with the arm can be seen;
- Fig 2.: shows a schematic top view of the two modules with the adjusting arm from fig. 1;
- Fig 3.: shows another schematic perspective view of the modules from figs. 1 and 2;
- Fig 4.: shows a schematic exploded view of the modules from figs. 1 to 3.

### Exemplary Embodiments of the Invention

The invention will be further described by means of exemplary embodiments with reference to the respective drawings.

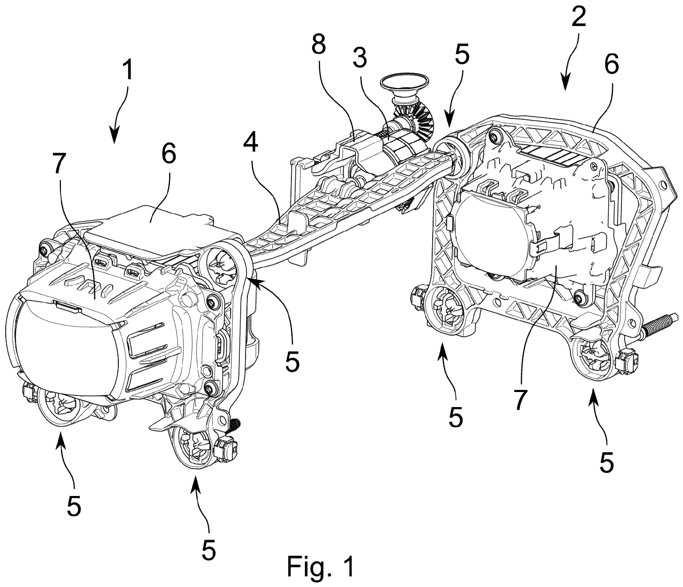

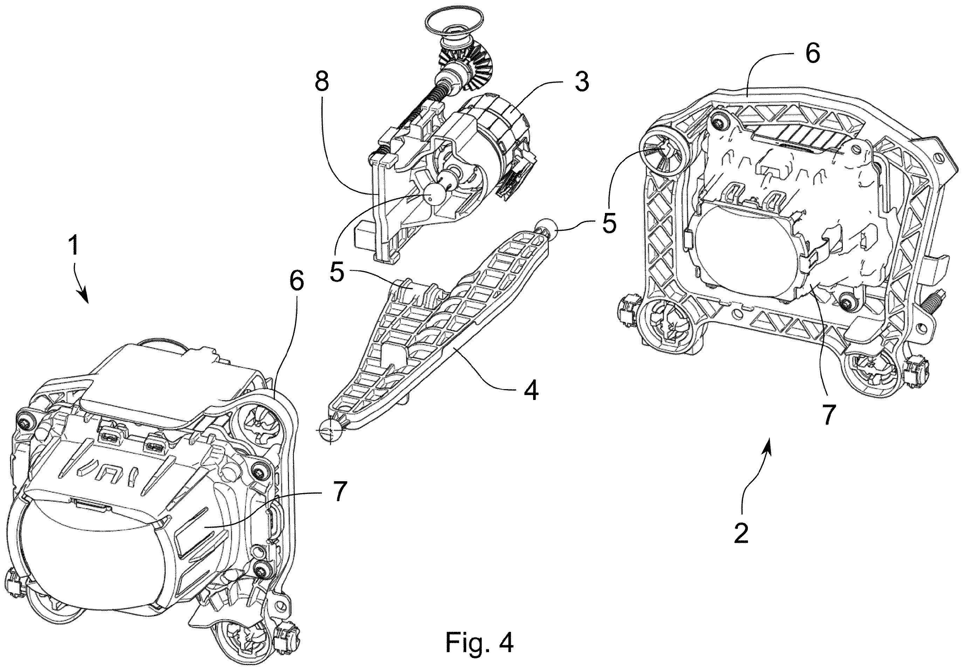

A first embodiment of the vehicle headlight according to the present invention is schematically depicted in figs. 1 to 4. The headlight in this embodiment comprises two lighting modules - a first module 1 and a second module 2. Both these modules are matrix modules which complement each other when providing any desired illumination functions, e.g., high beam, low beam, fog lights etc. Each module has any standard headlight module components, i.e., LED light sources, lens, cover lens, reflector, wiring, heatsink, electrical connectors etc. In this embodiment, the modules each have an inner frame 7, which encloses the above-mentioned illumination and electronical components, and an outer frame 6, which surrounds the inner frame 7. The outer frame 6 serves for connecting the modules to other headlight components, namely to a support structure of the headlight, to the other module and to an actuator 3 for tilting/pivoting the modules.

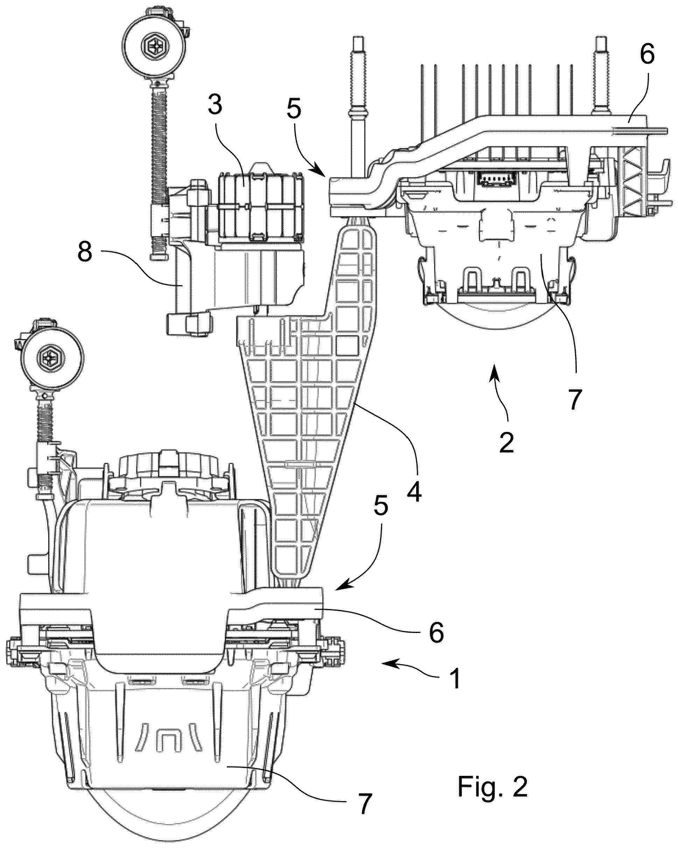

The support structure of the headlight is its main structural component which serves for holding all the other components together and for attaching the headlight to an automobile. The support structure (not shown) in this example is a plastic casing with openings for wiring and for adjusting rods which can be seen e.g., on the left side of fig. 2. The modules, the adjusting rods and other headlight components such as cover lens, further modules, actuators, or frames etc. are attached to the casing.

The first module 1 and the second module 2 are both attached to the supporting structure via a rotational connection. For each of the modules, the connection comprises two ball joints 5 (see fig. 1) which thus define a rotational axis which connects the centers of the ball joints 5. In this embodiment, the rotational axes of both modules are parallel to each other, horizontal and perpendicular to a longitudinal axis of an automobile, when the headlight is mounted to this automobile. The modules can thus be pivoted or tilted more or less towards the road ahead. In this embodiment, a default angle between a horizontal plane and a slightly downwards-oriented output direction of each module is about 0.5 degrees and the module can be tilted by up to 2° upwards a up to 3° downwards. I.e., an interval of the rotational movement of each module is 5 degrees.

The actuator 3 which adjusts the modules, i.e., adjusts their tilting, is automatically controlled by the automobile during travel to maintain the inclination of the modules with respect to the road. For example, during braking, the automobile has a tendency to move its front part (including the headlight) closer to the road. The modules can thus be tilted upwards during braking to cancel out or at least partially balance this movement. Acceleration can have similar but opposite effect and the modules can thus be tilted downwards during acceleration. When the automobile is loaded, it can similarly tilt the automobile and a tilting of the modules in opposite direction is then desirable. The actuator 3 in this embodiment is a linear motor which provides a horizontal movement parallel to the direction of travel and thus to the longitudinal axis of the automobile, when the headlight is mounted on the automobile.

The modules are linked together to synchronize their adjustment such that they are always tilted by substantially the same amount and thus they both emit light in the same direction, regardless of their inclination with respect to the horizontal plane. This linking is done by an adjusting arm 4 which runs from the first module 1 towards the second module 2 and is connected by a ball joint 5 to both. The adjusting arm 4 runs in the front-back direction of the headlight in the illustrated embodiment because the first module 1 is more to the front than the second module 2. The fist module is also more to the right than the second module 2, so the adjusting arm 4 runs from the left side of the first module 1 to the right side of the second module 2. (The left and right sides herein refer to the left and right when facing in the direction of travel of the automobile).

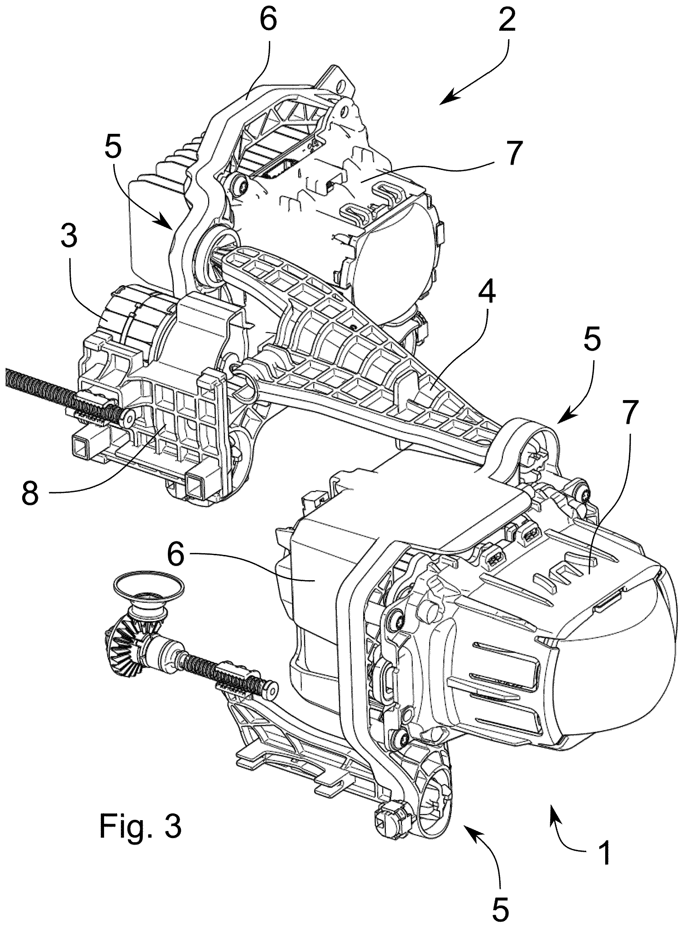

The shape of the adjusting arm 4 is thus affected by the relative position of the modules. In fig. 3, it can be seen that the arm has a curved section running between the modules and a substantially flat section which runs along the curved section, and which is connected to the actuator 3. The adjusting arm 4 also has a non-constant width - it is narrower at its front end (by the first module 1) and widens towards the back. The adjusting arm's 4 surface has a grid-like structure which increases its mechanical stability.

The actuator 3 (its movable part) is connected to the arm from the back side of the arm via another ball joint 5. Since the modules have circular trajectories during the adjustment and the points of connection between the arm and the modules can be at different distances from the respective module's rotational axis, the arm is slightly rotated during its movement towards the front or the back. The ball joints 5 at all the three connections of the arm enable this rotation of the arm.

The stator of the actuator 3 is held by an actuator frame 8 which is also connected to the headlight's support structure. The actuator frame 8 is adjustable by one of the adjusting rods which serves for manual and more permanent adjustment of the modules. Rotation of the adjusting rod moves the actuator frame 8 to the front or back and thus also moves the actuator 3.

During use, i.e., when the headlight is mounted to an automobile and the automobile is in motion, the actuator 3 is controlled depending on acceleration and deceleration of the automobile (so-called self-leveling). The actuator 3 shifts the adjusting arm 4 (by up to several millimeters) to the front or the back, i.e., along the direction of travel. The adjusting arm 4 is rotationally connected to each module and thus its movement tilts both the modules around their respective rotational axes. Since the adjusting arm 4 transfers movement from the actuator 3 directly to each of the modules, both modules are rotated by substantially the same amount. In other words, the modules are adjusted by movement along trajectories having substantially the same shape and length. The light-emitting direction of both modules thus always have substantially the same inclination to each other, i.e., the headlight remains correctly adjusted in all positions of the adjustment of the modules.

In alternative embodiments, the ball joints 5 defining the rotational connections between the modules and the supporting structure can be replaced by any other rotational joint, e.g., a hinge comprising a pin attached to one of the connected parts and a sheath for the pin on the other part. In alternative embodiments the rotation of the modules can have a different direction of the axis. In some embodiments, the modules can be adjustable in more than one axis.

Similarly, the ball joints 5 connecting the adjusting arm 4 to the modules can be replaced by a different kind of movable or even non-movable connection, such as a hinge. In different embodiments the amount by which the modules can be rotated can also be different, e.g., the interval of rotation can have a different length than the above-mentioned 5°.

In different embodiments with different relative position of the modules, the adjusting arm 4 has a different shape. The modules can be e.g., directly next to each other, i.e., can have the same front-to-back position; they can by one above another etc.

In some alternative embodiments, there are three adjustable modules in the headlight, and they all share an actuator 3. The adjusting arm 4 is thus connected to the actuator 3 and to each of the at least three modules such that all the modules can be adjusted at once and with substantially the same movement trajectory. The adjusting arm 4 can thus be branched into several branches, each connected, preferably by a rotational connection, to one of the modules. One branch can also be connected to the actuator 3. Other features of such embodiments can for example be analogous to the first embodiment described above.

The individual modules can alternatively have different illumination function, e.g., each module can be dedicated to a specific function, such as a high-beam module and a low-beam module.

### Reference list

- 1: First module
- 2: Second module
- 3: Actuator
- 4: Adjusting arm
- 5: Ball joint
- 6: Outer frame
- 7: Inner frame
- 8: Actuator frame

## Claims

1. Vehicle headlight comprising at least a first module (1) for providing illumination, a second module (2) for providing illumination, an actuator (3) for adjusting the modules, and a support structure, wherein the first module (1) is connected to the support structure through a movable connection and the second module (2) is connected to the support structure through a movable connection, **characterized in that,** the headlight further comprises an adjusting arm (4) for transferring movement from the actuator (3) to each of the first module (1) and the second module (2), wherein the adjusting arm (4) extends between the first module (1) and the second module (2), and the adjusting arm (4) is connected to the first module (1), to the second module (2) and to the actuator (3).

2. The vehicle headlight according to claim 1 **wherein** the movable connection between the first module (1) and the support structure and/or the movable connection between the second module (2) and the support structure is a rotational connection with one rotational axis.

3. The vehicle headlight according to claim 2 **wherein** the movable connection between the first module (1) and the support structure and the movable connection between the second module (2) and the support structure have parallel rotational axes.

4. The vehicle headlight according to any of the preceding claims **wherein** the connection between the adjusting arm (4) and the first module (1) and/or the connection between the adjusting arm (4) and the second module (2) is a rotational connection.

5. The vehicle headlight according to any of the preceding claims **wherein** the connection between the adjusting arm (4) and the actuator (3) is a rotational connection.

6. The vehicle headlight according to any of the preceding claims **wherein** the actuator (3) is a linear actuator.

7. The vehicle headlight according to any of the preceding claims **wherein** the adjusting arm (4) is curved.

8. The vehicle headlight according to any of the preceding claims **wherein** the adjusting arm (4) has a non-constant cross-section.
